Europäisches Patentamt

European Patent Office

Office européen des brevets

(19)

(11) Veröffentlichungsnummer : **0 057 927**
**B1**

(12) # EUROPÄISCHE PATENTSCHRIFT

(45) Veröffentlichungstag der Patentschrift :
10.09.86

(21) Anmeldenummer : **82100862.0**

(22) Anmeldetag : **06.02.82**

(51) Int. Cl.⁴ : **G 01 F   1/26, F 15 B 21/08**

(54) **Strömungsmesseinrichtung.**

(30) Priorität : **10.02.81 US 233279**

(43) Veröffentlichungstag der Anmeldung :
**18.08.82 Patentblatt 82/33**

(45) Bekanntmachung des Hinweises auf die Patenterteilung : **10.09.86 Patentblatt 86/37**

(84) Benannte Vertragsstaaten :
**AT DE FR GB IT NL SE**

(56) Entgegenhaltungen :
**DE-A- 2 104 394**
**DE-A- 2 619 971**
**DE-A- 2 707 212**
**DE-A- 2 904 144**
**DE-A- 2 923 203**
**US-A- 4 205 592**

(73) Patentinhaber : **DEERE & COMPANY**
**1 John Deere Road**
**Moline Illinois 61265 (US)**

(72) Erfinder : **Nelson, Roger John**
**3815 Clearview Drive**
**Cedar Falls Iowa 50613 (US)**

(74) Vertreter : **Gramm, Werner, Prof. Dipl.-Ing.**
**Patentanwälte Gramm + Lins Theodor-Heuss-**
**Strasse 2**
**D-3300 Braunschweig (DE)**

Jouve, 18, rue St-Denis, 75001 Paris, France

**Beschreibung**

Die Erfindung betrifft eine Strömungsmeßeinrichtung bestehend aus
— einem Gehäuse mit einem Strömungskanal,
— einem Ventilkörper, der im Gehäuse in Abhängigkeit von der jeweiligen durch den Strö-mungskanal fließenden Durchflußmenge unter-schiedliche Verschiebungspositionen einnimmt ;
— einer die jeweilige Position des Ventilkörpers abfühlenden Meßeinrichtung, die mit einem ersten Teil mit dem Gehäuse und einem zweiten Teil mit dem Ventilkörper verbunden ist und einen sich in Abhängigkeit von der Position des Ventilkörpers ändernden Parameter aufweist.

Eine derartige Ausführungsform läßt sich z. B. der US-Patentschrift 4 205 592 entnehmen. Der Ventilkörper ist hier tellerartig ausgebildet und wird von einer Schraubenfeder entgegen der Durchströmrichtung gegen einen Rückschlagventilsitz gedrückt, der einen Teil eines Dosierelementes in Form einer sich in Strö-mungsrichtung konisch erweiternden Durchströ-möffnung bildet. Der Ventilkörper sitzt auf einer Stange, die mit ihrem einen Ende im Gehäuse längsverschiebbar geführt ist und mit ihrem anderen Ende durch eine Gehäusetrennwandung ragt, die den Strömungskanal von einer Gehäusekammer abtrennt, in der die Meßeinrichtung untergebracht ist. Letztere besteht aus einem gehäusefest angeordneten Potentiometer, dessen Spannung von einem Schleifer abgegriffen wird, der am Ende der vorstehend genannten Stange des Ventilkörpers befestigt ist.

Neben dieser Bauform sind zahlreiche andere Lösungsvorschläge für Strömungsmeßeinrichtungen bekannt. Alle diese Ausführungsformen bauen verhältnismäßig voluminös, da die Meßreinrichtung außerhalb des Ventilkörpers und in einigen Fällen auch außerhalb des Gehäuses angeordnet ist.

Der Erfindung liegt somit die Aufgabe zu-grunde, die eingangs erläuterte Strömungsein-richtung in ihrer Bauform zu verkleinern.

Diese Aufgabe wird erfindungsgemäß dadurch gelöst, daß beide Teile der Meßeinrichtung in einem Hohlraum innerhalb des Ventilkörpers liegen.

Dabei ist es zweckmäßig, wenn das eine Ende des Ventilkörpers in einem zylindrischen Dosierelement verschiebbar geführt ist, während das andere Ende des Ventilkörpers den vorstehend genannten ersten Teil der Meßeinrichtung übergreift. Diese Meßeinrichtung ist in einer Kammer angeordnet, die vom Strömungskanal isoliert ist mit Ausnahme einer Entlastungsbohrung, die sich durch eine Seitenwandung des Ventilkörpers erstreckt. Ein Abschnitt des Ventilkörpers fungiert als Rückschlagventil und verhindert eine Rückströmung im Strömungskanal. Eine Feder drückt den Ventilkörper in eine den Durchfluß unterbrechende Sperrstellung. Die Meßeinrichtung in Form eines Verschiebungswandlers erzeugt ein Ausgangssignal, das die jeweilige Verschiebungsstellung des Ventilkörpers angibt und der jeweiligen Durchflußmenge proportional ist.

Die erfindungsgemäße Strömungsmeßeinrichtung baut sehr kompakt, da die Meßeinrichtung räumlich in den Ventilkörper integriert ist.

Weitere vorteilhafte Ausgestaltungen der Erfindung sind Gegenstand der Ansprüche 2 bis 17 und werden zusammen mit weiteren Vorteilen der Erfindung anhand eines Ausführungsbeispieles näher erläutert.

In der Zeichnung ist eine als Beispiel dienende Ausführungsform der Erfindung dargestellt. Es zeigen :

Figur 1 eine Strömungsmeßeinrichtung im Längsschnitt ;

Figur 2 in vergrößertem Maßstab ein Dosierelement in Stirnansicht ;

Figur 3 ebenfalls in vergrößertem Maßstab einen Magnethalter in Seitenansicht ;

Figur 4 einen Schnitt gemäß der Linie 4-4 in Figur 3 und

Figur 5 in schematischer Darstellung eine Schaltung für die Abgabe eines Meßsignals.

Ein Strömungswandler 10 umfaßt ein Gehäuse 12 mit einem Einlaß 14 und einem Paar L-förmiger Auslaßkanäle 16, 18, die auf der dem Einlaß gegenüberliegenden Seite eines Einlaufstutzens 26 in Auslaßöffnungen 17, 19 münden. Ausgehend vom Einlaß 14 erstreckt sich durch das Gehäuse 12 eine abgesetzte Bohrung 20, an die an sich gegenüberliegenden Seiten die Auslaßkanäle 16, 18 angeschlossen sind. Die abgesetzte Bohrung 20 weist zwei Ringschultern 22, 24 auf. Flüssigkeit strömt durch den Strömungswandler 10 entlang eines Strömungskanals, der durch den Einlaß 14, einen Abschnitt der Bohrung 20, die Auslaßkanäle 16, 18 sowie die Auslaßöffnungen 17, 19 gebildet ist.

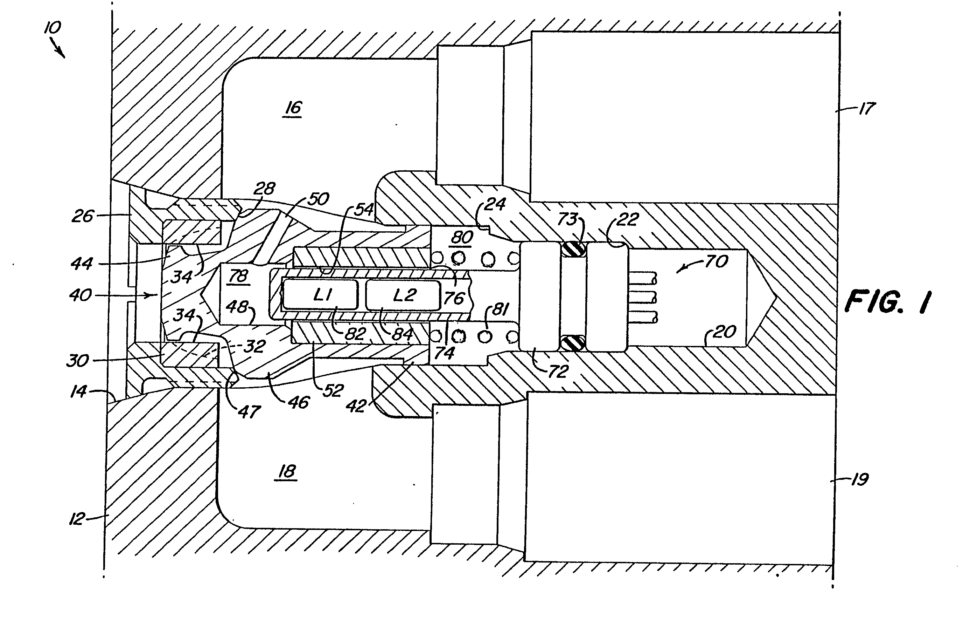

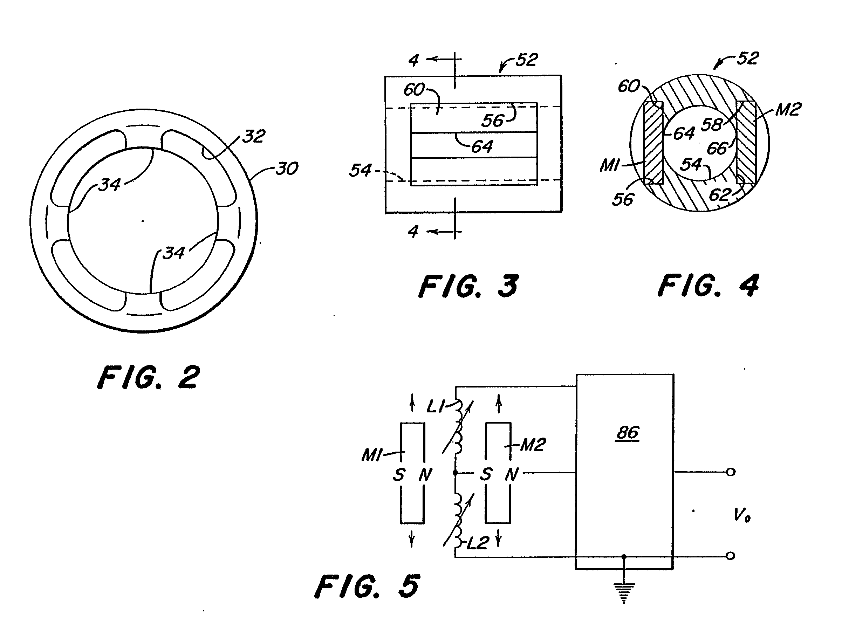

In den Einlaß 14 des Gehäuses 12 ist ein hohlzylindrischer Einlaufstutzen 26 eingeschraubt, der an seinem stromab liegenden Ende einen Rückschlagventilsitz 28 bildet, stromauf von dem ein hohlzylindrisches Dosierelement 30 mit Preßsitz koaxial im Einlaufstutzen festgelegt ist. Das Dosierelement 30 weist eine konische Bohrung auf, die sich in Strömungsrichtung erweitert und mit vier nach innen ragenden Radialrippen 34 bestückt ist, die sich axial erstreckende Gleitführungen bilden, wie die Figuren 1 und 2 erkennen lassen.

Im Gehäuse 12 ist ein im wesentlichen zylindrischer, aus magnetischem Stahl bestehender Ventilkörper 40 längsverschiebbar gelagert, der an seinem einen Ende einen ersten Radialflansch 42 aufweist und mit diesem in einem Abschnitt der Gehäusebohrung 20 gleitend geführt ist. Das andere Ende des Ventilkörpers 40 endet in einem zweiten Radialflansch 44, der an den vorstehend genannten Radialrippen 34 des Dosierelementes 30 gleitend geführt ist. Die beiden Radialflansche 42, 44 bilden somit zusammen mit den ihnen zugeordneten Gleitführungen eine Axialführung für den Ventilkörper 40 innerhalb des Gehäuses 12. Der Radialflansch 44 des Ventilkörpers 40 wirkt außerdem mit der konischen Bohrung 32 des Dosierelementes 30 zusammen und bildet mit diesem einen variablen Drosselquerschnitt. Die Form der konischen Bohrung 32 kann modifiziert werden, um die Art und Weise zu steuern, in der der Ventilkörper 40 unter Wirkung der durch den Strömungswandler fließenden Flüssigkeitsmenge verschoben wird. So läßt sich z. B. durch Verringerung der Konizität am stromauf liegenden Ende der Bohrung 32 auch bei verhältnismäßig geringen Strömungsmengen eine verhältnismäßig große Verschiebung des Ventilkörpers erreichen. Mit der in Figur 1 dargestellten konischen Bohrung 32 ergibt sich für den Verschiebeweg des Ventilkörpers 40 eine angenähert lineare Funktion der Flüssigkeitsmenge.

Der Ventilkörper 40 weist noch einen dritten, axial zwischen den Radialflanschen 42, 44 angeordneten Radialflansch 46 auf, der mit einer Dichtfläche 47 abdichtend gegen den Rückschlagventilsitz 28 anliegt und so eine Umkehrströmung von den Auslaßkanälen 16, 18 zum Einlaß 14 verhindert. Die in der abgesetzten Bohrung 20 vorgesehene Ringschulter 24 bildet einen Anschlag zur Begrenzung des Verschiebeweges des Ventilkörpers 40 weg vom Dosierelement 30.

Der Ventilkörper 40 weist ein abgesetztes Sackloch 48 auf, das in das stromab liegende Ende des Ventilkörpers 40 mündet. Durch die Wandung des Ventilkörpers 40 ist eine Entlastungsbohrung 50 geführt, die einen Abschnitt kleineren Durchmessers des Sacklochs 48 mit den Auslaßkanälen 16, 18 verbindet.

In einem Abschnitt größeren Durchmessers des Sacklochs 48 ist ein amagnetischer hohlzylindrischer Magnethalter 52 angeordnet, durch den sich vollständig eine Axialbohrung 54 erstreckt. Die Figuren 3 und 4 lassen erkennen, daß an gegenüberliegenden Seiten des Magnethalters 52 ein Paar Schlitze 56, 58 mit rechteckigem Querschnitt vorgesehen sind, die mit ihrem Boden 60, 62 in die Bohrung 54 ragen und zwischen sich ein Paar rechteckiger Ausnehmungen 64, 66 bilden. In den Schlitzen 56, 58 sind zwei stabförmige Permanentmagneten M1, M2 angeordnet, die durch die Wandung des Abschnitts größeren Durchmessers des Sacklochs 48 in den Schlitzen festgehalten werden. Die Nordpole der beiden Magnete M1, M2 weisen in die gleiche Richtung, wie in Figur 5 schematisch dargestellt ist.

In die Gehäusebohrung 20 ist ein zylindrischer, amagnetischer Träger 70 mit einem Doppelflansch 72 etwas größeren Durchmessers eingeschoben und liegt gegen die Ringschulter 22 an. Zwischen den beiden Flanschen ist ein O-Ring 73 vorgesehen, der zwischen Träger 70 und Wandung der Gehäusebohrung 20 eine flüssigkeitsdichte Abdichtung bewirkt. An der dem Dosierelement 30 zugewandten Stirnfläche des Doppelflansches 72 ist zentrisch eine sich axial erstreckende hohlzylindrische Stange 74 angeordnet, die mit einem Teilabschnitt koaxial in die Bohrung 54 des Magnethalters 52 ragt und von letzterem über einen ringförmigen Schlitz bzw. einen Ringkanal 76 getrennt ist. Träger 70, Ventilkörper 40 und Wandung der Gehäusebohrung 20 umschließen eine volumenveränderliche Kammer, die zwei volumenveränderliche Hohlräume 78, 80 aufweist, die untereinander über den Ringkanal 76 verbunden sind. Das Volumen der beiden genannten Kammern wird verringert, wenn sich der Ventilkörper — bezogen auf die Figur 1 — nach rechts bewegt. Der Hohlraum 78 ist über die Entlastungsbohrung 50 mit den Auslaßkanälen 16, 18 verbunden, um einen Druckaufbau in den Hohlräumen 78, 80 zu verhindern, der einer Verschiebung des Ventilkörpers 40 entgegenstehen könnte. Innerhalb des Hohlraumes 80 ist eine Schraubenfeder 81 angeordnet, die die Stange 74 koaxial umgreift und sich mit ihrem einen Ende an der Stirnfläche des Magnethalters 52 und mit ihrem anderen Ende an der Stirnfläche des Doppelflansches 72 des Trägers 70 abstützt. Die Schraubenfeder 81 drückt den Magnethalter 52 in das abgesetzte Sackloch 48 des Ventilkörpers 40 und drückt andererseits den Doppelflansch 72 des Trägers 70 gegen die Schulter 22 der Gehäusebohrung 20. Dadurch wird der Ventilkörper 40 durch die Schraubenfeder 81 — bezogen auf Figur 1 — nach links gedrückt in eine den Durchfluß unterbrechende Sperrstellung, in der zwischen Dosierelement 30 und Radialflansch 44 des Ventilkörpers 40 ein geringer Durchströmspalt verbleibt, und in der die Dichtfläche 47 des dritten Radialflansches 46 abdichtend am Rückschlagventilsitz 28 anliegt. Diese Abdichtung wirkt als Rückschlagventil, das eine Rückströmung durch den Strömungswandler 10 verhindert.

In dem Abschnitt der hohlzylindrischen Stange 74, der in den Magnethalter 52 ragt, sind zwei Ferrithülsen 82, 84 angeordnet, die Meßspulen L1, L2 mit variabler Induktivität enthalten. Derartige Ferrithülsen können bezogen werden von Licon, einer Abteilung der Firma Illinois Tool Works, Chicago, Illinois. Die Meßspulen L1, L2 können gemäß Figur 5 an eine integrierte Signalformschaltung 86 (z. B. Licon Nr. 80-330057) angeschlossen werden. Hinsichtlich weiterer Einzelheiten wird verwiesen auf Licon Product Bulletin, PS-1000. Die Magnete M1, M2, die Meßspulen L1, L2 und die Signalformschaltung 86 bilden einen Induktionsverschiebungswandler in Brückenschaltung zum Abfühlen der jeweiligen Verschiebungsstellung des Ventilkörpers 40. Es fällt noch unter diese Erfindung, andere Verschiebungswandler zu verwenden wie z. B. solche Ausführungsformen, die Differentialübertrager, Potentiometerwiderstände oder variable kapazitive Elemente verwenden.

Bei der erfindungsgemäßen Ausführungsform wird eine sehr kompakte Bauform erreicht, weil die Teile des Verschiebungswandlers koaxial in dem verschiebbaren Ventilkörper aufgenommen werden, also nicht mehr außerhalb des Ventilkörpers oder sogar außerhalb des Gehäuses angeordnet sind.

Die Arbeitsweise des Strömungswandlers ist wie folgt : Fließt keine Strömung durch den Strömungswandler 10, wird der Ventilkörper 40 durch die Schraubenfeder 81 in seine in Figur 1 dargestellte Sperrstellung gedrückt, in der die Dichtfläche 47 des Ringflanches 46 abdichtend am Rückschlagventilsitz 28 anliegt. Strömt hingegen Flüssigkeit in den Einlaß 14, um von dort durch die Auslaßkanäle 16, 18 zu strömen, so verschiebt diese Flüssigkeit den Ventilkörper 40 axial nach rechts in eine Verschiebungsstellung, wodurch die Schraubenfeder 81 so weit zusammengedrückt wird, bis die von der Flüssigkeitsströmung auf den Ventilkörper 40 ausgeübten Verschiebungskräfte mit der zunehmenden Kraft der Feder 81 im Gleichgewicht stehen. Die Form der konischen Bohrung 32 des Dosierelementes 30 ist so gewählt, daß der jeweilige Betrag der Verschiebung des Ventilkörpers proportional ist der durch den Strömungswandler 10 fließenden Flüssigkeitsmenge. Durch Verschiebung des Ventilkörpers 40 werden die Magnete M1, M2 gegenüber den Meßspulen L1, L2 verschoben, so daß deren Induktivitäten verändert werden. Diese Änderung der Induktivitäten wird von der Signalformschaltung 86 in ein Gleichstromausgangssignal $V_o$ umgewandelt, das somit proportional ist der axialen Verschiebungsposition des Ventilkörpers 40 und der durch den Strömungswandler 10 fließenden Flüssigkeitsmenge.

**Patentansprüche**

1. Strömungsmeßeinrichtung, bestehend aus
— einem Gehäuse (12) mit einem Strömungskanal (14, 16, 17, 18, 19, 20, 26, 32) ;
— einem Ventilkörper (40), der im Gehäuse (12) in Abhängigkeit von der jeweiligen durch den Strömungskanal (14, 16, 17, 18, 19, 20, 26, 32) fließenden Durchflußmenge unterschiedliche Verschiebungspositionen einnimmt ;
— einer die jeweilige Position des Ventilkörpers (40) abfühlenden Meßeinrichtung (L1, L2, M1, M2, 52, 74), die mit einem ersten Teil (L1, L2, 74) mit dem Gehäuse (12) und einem zweiten Teil (M1, M2, 52) mit dem Ventilkörper (40) verbunden ist und einen sich in Abhängigkeit von der Position des Ventilkörpers (40) ändernden Parameter aufweist,
dadurch gekennzeichnet, daß beide Teile (L1, L2, 74, M1, M2, 52) der Positionsmeßeinrichtung in einem Hohlraum (48) innerhalb des Ventilkörpers (40) liegen.

2. Strömungsmeßeinrichtung nach Anspruch 1, dadurch gekennzeichnet, daß der Ventilkörper (40) angenähert zylindrisch ausgebildet ist, und daß sein Hohlraum (48) die Form eines Sackloches hat.

3. Strömungsmeßeinrichtung nach Anspruch 1 oder 2, dadurch gekennzeichnet, daß der Ventilkörper (40) zumindest eine Entlastungsbohrung (50) aufweist, die den Hohlraum (48) mit dem Strömungskanal (16, 18) verbindet.

4. Strömungsmeßeinrichtung nach Anspruch 1, 2 oder 3, dadurch gekennzeichnet, daß der zweite Teil (M1, M2, 52) der Positionsmeßeinrichtung ein Magnetteil (M1, M2) und ihr erster Teil (L1, L2, 74) ein Spulenteil (L1, L2) mit variabler Induktivität ist, wobei der Spulenteil in das Sackloch (48) ragt und eine variable Induktion erzeugt, die die jeweilige Relativstellung des Magnetteils (M1, M2) gegenüber dem Spulenteil (L1, L2) angibt.

5. Strömungsmeßeinrichtung nach Anspruch 4, dadurch gekennzeichnet, daß der Magnetteil (M1, M2) ein Paar Permanentmagnete aufweist.

6. Strömungsmeßeinrichtung nach Anspruch 4 oder 5, dadurch gekennzeichnet, daß in dem Sackloch (48) ein amagnetischer hohlzylindrischer Magnethalter (52) angeordnet ist, der von dem Ventilkörper (40) getragen und zusammen mit diesem verschiebbar ist, Nuten (56, 58) zur Aufnahme des Magnetteils (M1, M2) aufweist und den Spulenteil (L1, L2) umschließt.

7. Strömungsmeßeinrichtung nach einem der Ansprüche 3 bis 6, dadurch gekennzeichnet, daß Positionmeßeinrichtung (72, 74), Ventilkörper (40) und Gehäuse (12) eine volumenveränderliche Kammer (78, 80), deren Volumen der Position des Ventilkörpers entspricht, umschließen, daß die Kammer (78, 80) durch den Ventilkörper vom Strömungskanal (14, 16, 17, 18, 19, 20, 26, 32) abgetrennt ist und mit letzterem ausschließlich durch die Entlastungsbohrung (50) in Verbindung steht, und daß ein Federglied (81) den Ventilkegel (40) in eine den Durchfluß durch den Strömungskanal (14, 16, 17, 18, 19, 20, 26, 32) unterbrechende Sperrstellung drückt.

8. Strömungsmeßeinrichtung nach Anspruch 7, dadurch gekennzeichnet, daß das Federglied (81) in der volumenveränderlichen Kammer (80) angeordnet ist.

9. Strömungsmeßeinrichtung nach Anspruch 7 oder 8, dadurch gekennzeichnet, daß die Positionsmeßeinrichtung (M1, M2, 52, 74) die volumenveränderliche Kammer in zwei volumenveränderliche Hohlräume (78, 80) unterteilt, die untereinander über einen Ringkanal (76) verbunden sind, der sich axial durch die Positionsmeßeinrichtung (52, 74) erstreckt, und daß die Entlastungsbohrung (50) in den ersten (78) der beiden Hohlräume (78, 80) mündet, während das Federglied (81) in dem zweiten Hohlraum (80) angeordnet ist.

10. Strömungsmeßeinrichtung nach Anspruch 9, dadurch gekennzeichnet, daß der erste Hohlraum (78) vom Ventilkörper (40) sowie der Positionsmeßeinrichtung (M1, M2, 52, 74), der zweite Hohlraum (80) zusätzlich vom Gehäuse (12) begrenzt ist.

11. Strömungsmeßeinrichtung nach einem der vorhergehenden Ansprüche, gekennzeichnet durch folgende Merkmale :
a) Zur Bildung einer axialen Gleitführung weist der Ventilkörper (40) an seinen sich gegenüberliegenden Enden erste und zweite Gleitlagerflächen auf, von denen die erste Gleitlagerfläche im Gehäuse (12) verschiebbar geführt ist;

b) im Strömungskanal (14, 26) ist ein Dosierelement (30) angeordnet, das zusammen mit dem Ventilkörper (40) einen variablen Drosselquerschnitt bildet und eine Gleitführung (34) für die zweite Gleitfläche des Ventilkörpers (40) aufweist.

12. Strömungsmeßeinrichtung nach Anspruch 11, gekennzeichnet durch folgende Merkmale:

a) Der Ventilkörper (40) weist an je einem Ende einen ersten (42) bzw. einen zweiten (44) Radialflansch auf, deren Umfangsflächen die ersten bzw. zweiten Gleitlagerflächen bilden;

b) das Dosierelement (30) besteht aus einer Buchse mit einer konischen, einen Teil des Strömungskanals (14, 16, 17, 18, 19, 20, 26, 32) bildenden Bohrung (32), in der nach innen ragende Radialrippen (34) angeordnet sind, die sich axial erstreckende Gleitführungen bilden, an denen der zweite Radialflansch (44) mit der zweiten Gleitlagerfläche gleitend geführt ist.

13. Strömungsmeßeinrichtung nach Anspruch 12, dadurch gekennzeichnet, daß der Ventilkörper (40) zwischen dem ersten und zweiten Radialflansch (42, 44) einen dritten Radialflansch (46) aufweist, der zur Verhinderung einer Umkehrströmung in der Sperrstellung des Ventilkörpers mit einer Dichtfläche (47) abdichtend gegen einen im Strömungskanal (14, 16, 17, 18, 19, 20, 26, 32) angeordneten Rückschlagventilsitz (28) anliegt.

14. Strömungsmeßeinrichtung nach einem der Ansprüche 4 bis 13, gekennzeichnet durch einen am Gehäuse (12) festgelegten amagnetischen Träger (70), der den Spulenteil (L1, L2) aufnimmt und zentrisch innerhalb des Sackloches (48) im Ventilkörper (40) hält.

15. Strömungsmeßeinrichtung nach Anspruch 14, dadurch gekennzeichnet, daß der amagnetische Träger (70) ein Flanschteil (72) aufweist, das in das Gehäuse (12) eingreift und ein Widerlager für das Federglied (81) bildet, das sich auf seiner gegenüberliegenden Seite am Ventilkörper (40) abstützt.

16. Strömungsmeßeinrichtung nach einem der vorhergehenden Ansprüche, dadurch gekennzeichnet, daß der Strömungskanal (14, 16, 17, 18, 19, 20, 26, 32) auf der einen Seite des Gehäuses (12) einen Einlaß (14) aufweist, an den zwei sich gegenüberliegende Auslaßkanäle (16, 18) angeschlossen sind.

17. Strömungsmeßeinrichtung nach einem der Ansprüche 13 bis 16, dadurch gekennzeichnet, daß im Strömungskanal (14, 16, 17, 18, 19, 20, 26, 32) ein fest mit dem Gehäuse (12) verbundener hohlzylindrischer Einlaufstutzen (26) liegt, der an seinem stromab liegenden Ende den Rückschlagventilsitz (28) aufweist, stromauf von dem das Dosierelement (30) koaxial im Einlaufstutzen festgelegt ist.

## Claims

1. A fluid flow transducer comprising:

— a housing (12) defining a flow passage (14, 16, 17, 18, 19, 20, 26, 32) for fluid flow therethrough;

— a flow-responsive valve member (40) movably mounted in the housing (12) and having a variable position therein depending upon the rate of fluid flow through the passage (14, 16, 17, 18, 19, 20, 26, 32);

— sensing means (L1, L2, M1, 52, 74) for sensing the position of the flow-responsive valve member (40), the sensing means including a first part (L1, L2, 74) fixed with respect to the housing (12) and a second part (M1, M2, 52) fixed with respect to the valve member (40), the sensing means having a parameter which varies as a function of the position of the valve member (40), characterized in that both parts (L1, L2, 74, M1, M2, 52) of the position sensing means are positioned in a cavity (48) within the valve member (40).

2. The flow transducer of claim 1, wherein the valve member (40) has a substantial cylindrical form, and its cavity (48) is in the form of a blind bore.

3. The flow transducer of claim 1 or 2, wherein the valve member (40) includes at least one relief passage (50) for communicating said cavity (48) with the flow passage (16, 18).

4. The flow transducer of claim 1, 2 or 3, wherein said second part (M1, M2, 52) of the position sensing means is a magnetic member (M1, M2) and said first part (L1, L2, 74) is a coil member (L1, L2) having variable inductivity, said coil member extending into the blind bore (48) and producing a variable inductance indicative of the relative position of the magnetic member (M1, M2) with respect to the coil member (L1, L2).

5. The flow transducer of claim 4, wherein the magnetic member (M1, M2) comprises a pair of permanent magnets.

6. The flow transducer of claim 4 or 5, wherein a non-magnetic hollow cylindrical carrier (52) is positioned in the blind bore (48), is carried by the valve member (40), is movable with the valve member, comprises grooves (56, 58) for receiving the magnetic member (M1, M2) and encloses said coil member (L1, L2).

7. The flow transducer of one of the claims 3 till 6, wherein position sensing means (72, 74), valve member (40) and housing (12) enclose a variable volume chamber (78, 80) the volume of which depends upon the position of the valve member, said chamber (78, 80) being separated from the flow path (14, 16, 17, 18, 19, 20, 26, 32) by the valve member and communicating with the flow path exclusively via said relief passage (50) and wherein resilient means (81) urge the valve member (40) to a no-flow position, interrupting the fluid flow through flow path (14, 16, 17, 18, 19, 20, 26, 32).

8. The flow transducer of claim 7, wherein the resilient means (81) is positioned within the variable volume chamber (80).

9. The flow transducer of claim 7 or 8, wherein the position sensing means (M1, M2, 52, 74) devides the variable volume chamber into two variable volume cavities (78, 80) communicated with each other via an annular passage (76) which extends axially through the position sensing means (52, 74), and wherein the relief passage (50) ends in the first (78) of both cavities (78, 80), the resilient means (81) being positioned within the second cavity (80).

10. The flow transducer of claim 9, wherein said first cavity (78) is defined by the valve member (40) and the position sensing means (M1, M2, 52, 74), said second cavity (80) is in addition defined by the housing (12).

11. The flow transducer of one of the preceding claims, further comprising :
a) to maintain axial sliding guide the valve member (40) comprises first and second bearing surfaces at its opposite ends, the first bearing surface slidably engaging the housing (12) ;
b) a metering member (30) is positioned in the flow path (14, 26) and cooperates with the valve member (40) to define a variable flow restriction, the metering member comprises sliding guide means (34) for the second bearing surface of the valve member (40).

12. The flow transducer of claim 11, further comprising :
a) the valve member (40) comprises first (42), second (44) radially extending flanges, respectively, at one end each, the peripheral surfaces of these flanges defining the first and second bearing surfaces, respectively ;
b) the metering member (30) comprising a sleeve with a tapered bore (32) defining a portion of the flow path (14, 16, 17, 18, 19, 20, 26, 32) and having a plurality of radially inwardly extending ribs (34) forming axially extending bearing surfaces slidably engaging the second bearing surface of the second radially extending flange (44).

13. The flow transducer of claim 12, wherein said valve member (40) further comprises a third radially extending flange (46) positioned between the first and second flanges (42, 44) ; and a sealing surface (47) sealingly engaged with a check valve seat (28) positioned in the flow path (14, 16, 17, 18, 19, 20, 26, 32) to prevent reverse fluid flow in the no-position of the valve member.

14. The flow transducer of one of the claims 4 till 13, further comprising a non-magnetic support member (70) fixed to the housing (12) and supporting the coil member (L1, L2) centrally in the blind bore (48) of the valve member (40).

15. The flow transducer of claim 14, wherein the non-magnetic support member (70) includes a flanged portion (72) engaging the housing (12) and defining a support for the resilient means (81) which abuts with its opposite side the valve member (40).

16. The flow transducer of one of the preceding claims, wherein the flow passage (14, 16, 17, 18, 19, 20, 26, 32) comprises at one side of the housing (12) an inlet (14) communicating with two opposite outlet passages (16, 18).

17. The flow transducer of one of the claims 13 till 16, further comprising a hollow cylindrical inlet fitting (26) positioned in the flow path (14, 16, 17, 18, 19, 20, 26, 32) and fixed to the housing (12) and having upstream and downstream ends, the downstream end including said check valve seat (28), the metering member (30) being fixed coaxially within the inlet fitting upstream from the check valve seat.

## Revendications

1. Débitmètre comportant :
— un carter (12) ménageant un canal d'écoulement (14, 16, 17, 18, 19, 20, 26, 32) ;
— une soupape (40) occupant dans le carter (12) différentes positions de déplacement en fonction du débit de passage momentané à travers le canal d'écoulement (14, 16, 17, 18, 19, 20, 26, 32) ;
— un dispositif de mesure (L1, L2, M1, M2, 52, 74) détectant la position momentanée de la soupape (40), qui est reliée par une première partie (L1, L2, 74) au carter (12) et par une seconde partie (M1, M2, 52) à la soupape et qui présente un paramètre variant en fonction de la position de la soupape (40),
caractérisé en ce que les deux parties (L1, L2, 74, M1, M2, 52) du dispositif de mesure de position sont logées dans une cavité (48) ménagée à l'intérieur de la soupape (40).

2. Débitmètre suivant la revendication 1, caractérisé en ce que la soupape (40) a une forme sensiblement cylindrique et en ce que sa cavité (48) a la forme d'un trou borgne.

3. Débitmètre suivant la revendication 1 ou 2, caractérisé en ce que la soupape (40) présente au moins un perçage de décharge (50) qui fait communiquer la cavité (48) avec le canal d'écoulement (16, 18).

4. Débitmètre suivant la revendication 1, 2 ou 3, caractérisé en ce que la seconde partie (M1, M2, 52) du dispositif de mesure de position est constituée par une partie magnétique (M1, M2) et en ce que sa première partie (L1, L2, 74) est formée par un système de bobine (L1, L2) à inductance variable, le système de bobine faisant saillie dans le trou borgne (48) et engendrant une induction variable qui indique la position relative momentanée de la partie magnétique (M1, M2) par rapport au système de bobine (L1, L2).

5. Débitmètre suivant la revendication 4, caractérisé en ce que la partie magnétique (M1, M2) est constituée par une paire d'aimants permanents.

6. Débitmètre suivant la revendication 4 ou 5, caractérisé en ce qu'il est prévu dans le trou borgne (48) un support d'aimants (52) non magnétique cylindrique creux, qui est porté lui-même par la soupape (40) et qui est déplaçable avec celle-ci, ce support comportant des rainures (56, 58) pour la réception de la partie magnétique (M1, M2) et entourant le système de bobine (L1, L2).

7. Débitmètre suivant l'une des revendications 3 à 6, caractérisé en ce que le dispositif de mesure de position (72, 74), la soupape (40) et le carter (12) délimitent une chambre (78, 80) de volume variable, dont le volume correspond à la position de la soupape, en ce que la chambre (78, 80) est séparée du canal d'écoulement (14, 16, 17, 18, 19, 20, 26, 32) par la soupape et communique avec ce canal exclusivement par le perçage de décharge (50), et en ce qu'un organe élastique (81) repousse la soupape (40) dans une position de blocage interrompant le passage à travers le canal d'écoulement (14, 16, 17, 18, 19, 20, 26, 32).

8. Débitmètre suivant la revendication 7, caractérisé en ce que l'organe élastique (81) est disposé dans la chambre à volume variable (80).

9. Débitmètre suivant la revendication 7 ou 8, caractérisé en ce que le dispositif de mesure de position (M1, M2, 52, 74) divise la chambre à volume variable en deux cavités à volume variable (78, 80), qui sont reliées entre elles par un canal ou passage annulaire (76) s'étendant axialement à travers le dispositif de mesure de position (52, 74), et en ce que le perçage de décharge (50) débouche dans la première (78) des deux cavités (78, 80), tandis que l'organe élastique (81) est logé dans la seconde cavité (80).

10. Débitmètre suivant la revendication 9, caractérisé en ce que la première cavité (78) est délimitée par la soupape (40) ainsi que par le dispositif de mesure de position (M1, M2, 52, 74), et en ce que la seconde cavité est délimitée en outre par le carter (12).

11. Débitmètre suivant l'une des revendications précédentes, caractérisé par les particularités suivantes :

a) pour réaliser un guidage à coulissement axial, la soupape (40) comporte, à ses extrémités opposées, une première et une seconde surfaces de portée et de glissement, parmi lesquelles la première surface de portée et de glissement est guidée de façon coulissante dans le carter (12) ;

b) il est prévu dans le canal d'écoulement (14, 26) un élément de dosage (30) qui définit, en combinaison avec la soupape (40), une section d'étranglement variable et qui comporte un guide de coulissement (34) pour la seconde surface de glissement de la soupape (40).

12. Débitmètre suivant la revendication 11, caractérisé par les particularités suivantes :

a) la soupape (40) comporte chaque fois à une extrémité une première (42) ou une seconde (44) bride radiale, dont les surfaces périphériques forment la première ou la seconde surface de portée et de glissement ;

b) l'élément de dosage (30) est constitué par une douille munie d'un alésage conique (32) formant une partie du canal d'écoulement (14, 16, 17, 18, 19, 20, 26, 32) et dans lequel sont disposées des nervures radiales (34) faisant saillie vers l'intérieur, qui forment des guides de coulissement s'étendant axialement, sur lesquels la seconde bride radiale (44) est guidée de façon coulissante par la seconde surface de portée et de glissement.

13. Débitmètre suivant la revendication 12, caractérisé en ce que la soupape (40) comporte, entre la première et la seconde brides radiales (42, 44), une troisième bride radiale (46) qui, pour empêcher un écoulement inversé dans la position de blocage de la soupape, s'applique de façon étanche par une surface d'étanchéité (47) contre un siège de clapet de retenue (28) disposé dans le canal d'écoulement (14, 16, 17, 18, 19, 20, 26, 32).

14. Débitmètre suivant l'une des revendications 4 à 13, caractérisé par un support non magnétique (70) fixé sur le carter (12), qui reçoit le système de bobine (L1, L2) et qui le maintient dans une position centrée à l'intérieur du trou borgne (48) ménagé dans la soupape (40).

15. Débitmètre suivant la revendication 14, caractérisé en ce que le support non magnétique (70) comporte une partie formant bride (72) qui s'engage dans le carter (12) et qui forme une contre-portée pour l'organe élastique (81), lequel prend appui sur la soupape (40) par son côté opposé.

16. Débitmètre suivant l'une des revendications précédentes, caractérisé en ce que le canal d'écoulement (14, 16, 17, 18, 19, 20, 26, 32) comporte, d'un côté du carter (12), un orifice d'entrée (14) auquel se raccordent deux canaux de sortie opposés (16, 18).

17. Débitmètre suivant l'une des revendications 13 à 16, caractérisé en ce qu'il est prévu, dans le canal d'écoulement (14, 16, 17, 18, 19, 20, 26, 32), un embout d'admission (26) en forme de cylindre creux, relié rigidement au carter (12) et présentant à son extrémité aval le siège de clapet de retenue (28) et en amont duquel l'élément de dosage (30) est immobilisé coaxialement dans l'embout d'admission.

FIG. 1

FIG. 2

FIG. 3

FIG. 4

FIG. 5